(19) Europäisches Patentamt
European Patent Office
Office européen des brevets

(11) **EP 4 047 511 A1**

(12) **EUROPEAN PATENT APPLICATION**
published in accordance with Art. 153(4) EPC

(43) Date of publication:
**24.08.2022 Bulletin 2022/34**

(21) Application number: **20933566.0**

(22) Date of filing: **19.11.2020**

(51) International Patent Classification (IPC):
***G06K 9/00*** *(2022.01)*

(86) International application number:
**PCT/CN2020/130110**

(87) International publication number:
**WO 2021/218124 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.04.2020 CN 202010356239**

(71) Applicant: **Beijing Baidu Netcom Science And
Technology Co., Ltd.
Beijing 100085 (CN)**

(72) Inventors:
• **YANG, Xipeng
Beijing 100085 (CN)**
• **JIANG, Minyue
Beijing 100085 (CN)**
• **TAN, Xiao
Beijing 100085 (CN)**
• **SUN, Hao
Beijing 100085 (CN)**
• **WEN, Shilei
Beijing 100085 (CN)**
• **ZHANG, Hongwu
Beijing 100085 (CN)**
• **DING, Errui
Beijing 100085 (CN)**

(74) Representative: **Richly & Ritschel Patentanwälte
PartG mbB
Sattlerweg 20
51429 Bergisch Gladbach (DE)**

(54) **METHOD AND DEVICE FOR DETECTING VEHICLE**

(57)     A method and device for detecting a vehicle, relating to the field of computer vision. The method comprises: obtaining an image to be detected (S101); inputting the image to be detected into a pre-established vehicle detection model to obtain a vehicle detection result (S102), wherein the vehicle detection result comprises category information, coordinate information, coordinate credibility, and coordinate error information of a detection frame, and the vehicle detection model is used for representing the correspondence between the image and the vehicle detection result; according to the coordinate credibility of the detection frame, selecting the detection frame from the vehicle detection result as a detection frame to be processed (S103); and generating coordinate information of a processed detection frame on the basis of coordinate information and coordinate error information of the detection frame to be processed (S104). The method improves the accuracy of the coordinate information of the detection frame, and reduces detection errors caused by inaccurate detection of the vehicle detection model.

100

Fig. 1

EP 4 047 511 A1

**Description**

This application claims priority to Chinese Patent Application No. 202010356239.8 titled "METHOD AND APPARATUS FOR DETECTING VEHICLE" filed on 29 April 2020, the full text of which is incorporated herein by reference.

TECHNICAL FIELD

Embodiments of the present disclosure relate to the technical field of computers, and specifically relate to the field of computer vision.

BACKGROUND

In recent years, with the rapid growth of the number of traffic vehicles, traffic surveillance is faced with an enormous challenge. As a key technology for constructing video surveillance of traffic conditions, vehicle object detection has attracted extensive attentions of researchers at home and abroad. Usually, when an actual road scenario is monitored, inaccurate detection caused by a very long vehicle will be encountered. For example, for trailers on an urban road, generally, a number of trailer images in a training set for training a detection model for detecting a vehicle is limited, such that a detection box only frames a vehicle head or only frames a rear trailing portion of the vehicle during detection using the detection model. An actual given vehicle is determined as two or more vehicles by the detection model.

SUMMARY

The present disclosure provides a method for detecting a vehicle and an apparatus for detecting a vehicle.
According to a first aspect, a method for detecting a vehicle is provided. The method includes: acquiring a to-be-inspected image; inputting the to-be-inspected image into a pre-established vehicle detection model to obtain a vehicle detection result, where the vehicle detection result includes category information, coordinate information, coordinate reliabilities, and coordinate error information of detection boxes, and the vehicle detection model is configured for characterizing a corresponding relationship between images and vehicle detection results; selecting, based on the coordinate reliabilities of the detection boxes, a detection box from the vehicle detection result for use as a to-be-processed detection box; and generating, based on coordinate information and coordinate error information of the to-be-processed detection box, coordinate information of a processed detection box.
According to a second aspect, an apparatus for detecting a vehicle is provided. The apparatus includes: an acquiring unit configured to acquire a to-be-inspected image; an inputting unit configured to input the to-be-inspected image into a pre-established vehicle detection model to obtain a vehicle detection result, where the vehicle detection result includes category information, coordinate information, coordinate reliabilities, and coordinate error information of detection boxes, and the vehicle detection model is configured for characterizing a corresponding relationship between images and vehicle detection results; a selecting unit configured to select, based on the coordinate reliabilities of the detection boxes, a detection box from the vehicle detection result for use as a to-be-processed detection box; and a generating unit configured to generate, based on coordinate information and coordinate error information of the to-be-processed detection box, coordinate information of a processed detection box.
According to a third aspect, an electronic device is provided, where the electronic device includes: at least one processor; and a memory communicatively connected to the at least one processor; where the memory stores instructions executable by the at least one processor, and the instructions are executed by the at least one processor to cause the at least one processor can execute the method according to any implementation in the first aspect.
According to a fourth aspect, a non-transitory computer readable storage medium storing computer instructions is provided, where the computer instructions are used for causing the computer to execute the method according to any implementation in the first aspect.
According to the technical solutions of the present disclosure, based on coordinate reliability and coordinate error information of a detection box, coordinate information of the detection box outputted from a vehicle detection model may be further processed to generate coordinate information of a processed detection box, thereby improving the accuracy of the coordinate information of the detection box, and reducing the detection error caused by the inaccurate detection of the vehicle detection model.
It should be understood that contents described in the SUMMARY are neither intended to identify key or important features of embodiments of the present disclosure, nor intended to limit the scope of the present disclosure. Other features of the present disclosure will become readily understood in conjunction with the following description.

BRIEF DESCRIPTION OF THE DRAWINGS

The accompanying drawings are used for better understanding of the present solution, and do not impose a limitation on the present disclosure. In the accompanying drawings:

Fig. 1 is a flowchart of a method for detecting a vehicle according to an embodiment of the present disclosure;

Fig. 2 is a schematic diagram of an application scenario of the method for detecting a vehicle according to the present disclosure;

Fig. 3 is a flowchart of the method for detecting a vehicle according to another embodiment of the present disclosure;

Fig. 4 is a schematic structural diagram of an apparatus for detecting a vehicle according to an embodiment of the present disclosure; and

Fig. 5 is a block diagram of an electronic device configured to implement the method for detecting a vehicle of embodiments of the present disclosure.

DETAILED DESCRIPTION OF EMBODIMENTS

Example embodiments of the present disclosure are described below with reference to the accompanying drawings, including various details of the embodiments of the present disclosure to contribute to understanding, which should be considered merely as examples. Therefore, those of ordinary skills in the art should realize that various alterations and modifications may be made to the embodiments described here without departing from the scope and spirit of the present disclosure. Similarly, for clearness and conciseness, descriptions of well-known functions and structures are omitted in the following description.

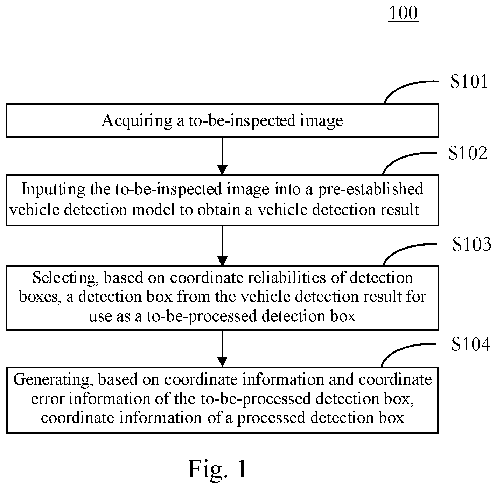

As shown in Fig. 1, Fig. 1 shows a flow chart 100 of a method for detecting a vehicle according to an embodiment of the present disclosure. The method for detecting a vehicle includes the following steps.

S101 includes: acquiring a to-be-inspected image.

In the present embodiment, an executing body of the method for detecting a vehicle may acquire the to-be-inspected image from an image collecting device (e.g., a camera or a video camera) through a wired connection or a wireless connection. The to-be-inspected image may include a vehicle image. As an example, the to-be-inspected image may be a road image including a vehicle. For example, the to-be-inspected image may be an image captured by a road surveillance camera.

Here, the executing body may be various electronic devices having an image inspection function, including but not limited to a smart phone, a tablet computer, a laptop portable computer, a desktop computer, and the like.

S102 includes: inputting the to-be-inspected image into a pre-established vehicle detection model to obtain a vehicle detection result.

In the present embodiment, the vehicle detection model may be pre-established inside the executing body, and the vehicle detection model may be configured for characterizing a corresponding relationship between images and vehicle detection results. As an example, the vehicle detection model may include a feature extraction portion and a corresponding relationship table. The feature extraction network may be configured for performing feature extraction on an image inputted into the vehicle detection model to obtain an eigenvector. The corresponding relationship table may be a table that is pre-established by skilled persons based on statistics of a large number of eigenvectors and a large amount of vehicle defection results, and stores a plurality of corresponding relationships between the eigenvectors and the vehicle defection results. Thus, the vehicle detection model may first extract the eigenvector of the received image using the feature extraction network, and use the extracted eigenvector as a target eigenvector, and then compare the target eigenvector with a plurality of eigenvectors in the corresponding relationship table successively, and use, if an eigenvector in the corresponding relationship table is identical or similar to the target eigenvector, a vehicle defection result corresponding to the eigenvector in the corresponding relationship table as a vehicle defection result of the received image.

Thus, the executing body may input the to-be-inspected image into the vehicle detection model to obtain the vehicle detection result. The vehicle detection result may include category information, coordinate information, coordinate reliabilities, and coordinate error information of detection boxes. Here, the category information of the detection box may include a category and a category confidence, i.e., a category to which a target in the detection box belongs and a probability of the target belonging to this category. For example, the category may include a minicar, a bus, a truck, a tricycle, a bicycle, and the like. The coordinate information of the detection box may be used for describing a position of the detection box. For example, the coordinate information of the detection box may include coordinates of a top left corner of the detection box. Usually, a rectangular detection box may be uniquely determined based on coordinates of its top left corner, its height, and its width. The coordinate reliability may be used for describing an accuracy of the coordinates. As an example, the coordinate reliability may be a value between 0 and 1, and the larger the value is, the more accurate the coordinates are. Taking coordinate information (x, y) as an example, the coordinate reliability may be outputted for x and y respectively. The coordinate error information may be used for describing a fluctuation of coordinate prediction. As an example, a coordinate error may be an offset variance. The larger the offset variance is, the greater the fluctuation of the predicted coordinates is; and the smaller the offset variance is, the smaller the fluctuation of the predicted coordinates is. Generally, the smaller the fluctuation is, the more accurate the predicted coordinate information is.

Generally, a vehicle detection result for a given vehicle may include a plurality of detection boxes. Generally, during target detection, a large number of detection boxes may be obtained for a given target by detection, and each detection box may have a confidence score. In this case, a detection box with a confidence score greater than a preset score threshold may be selected for use as a detection box corresponding to the target. Here, the confidence threshold may be set based on actual requirements. It should be noted that the target in the target detection may refer to a to-be-detected object. In the present embodiment, the vehicle is the to-be-detected object.

In some alternative implementations of the present embodiment, the vehicle detection model may include a feature extraction network, and the feature extraction network may include a dilated convolution layer and/or an asymmetrical convolution layer.

In the present implementation, the vehicle detection model may include the feature extraction network, and the feature extraction network may be configured for performing feature extraction on the received image to generate an eigenvector. Here, the feature extraction network may be various neural networks, for example, resnet (residual network) and resnext. In practice, feature extraction networks of different sizes may be selected based on actual requirements. For example, if the requirements for real-time processing are relatively high, while the requirements for accuracy are not very high, a lightweight structure, such as resnet18 or resnet34, may be selected. If the requirements for processing accuracy are relatively high, while the requirements for real-time processing are not very high, a heavyweight structure, such as resent101 or resneXt152, may be selected. In addition, a medium-sized structure between the lightweight structure and the heavyweight structure, such as resnet50 or resneXt50, may be selected.

In the feature extraction network, a dilated convolution structure may be added based on actual requirements to form a dilated convolution layer. The dilated convolution is to inject a hole on the basis of standard convolution to increase the reception field, such that an output includes a wider range of information, and such that the feature extraction network may extract feature information of more super-long vehicles.

In the feature extraction network, a convolution structure with an asymmetric convolution kernel may be added based on actual requirements to form an asymmetric convolution layer. The asymmetric convolution kernel helps to increase the receptive field of a super-long target whilst reducing the interference of background information, such that the feature extraction network may extract feature information of more super-long vehicles.

Here, the feature extraction network may adopt a feature pyramid network (FPN) structure. With the feature pyramid structure, fusion between information in different levels can be realized, and shallow semantic information and deep semantic information can be combined, such that the detection result output network may acquire more abundant features, thus the detection result output network outputs more accurate results.

In some alternative implementations of the present embodiment, the vehicle detection model may include not only the feature extraction network, but also a category information output network, a coordinate information output network, a coordinate reliability output network, and a coordinate error information output network. As an example, the category information output network may be configured for outputting the category information based on the feature information extracted by the feature extraction network. The coordinate information output network may be configured for outputting the coordinate information based on the feature information extracted by the feature extraction network. The coordinate reliability output network may be configured for outputting the coordinate reliability based on the feature information extracted by the feature extraction network. The coordinate error information output network may be configured for outputting the coordinate error information based on the feature information extracted by the feature extraction network.

In the present implementation, the vehicle detection model may be trained by the following approach.

First, a sample set is acquired.

In the present implementation, a training executing body of training the vehicle detection model may be identical to or different from the executing body of the method for detecting a vehicle. The training executing body may acquire the sample set. Here, a sample in the sample set may include a sample image, sample category information corresponding to the sample image, and sample coordinate information corresponding to the sample image. The sample category information corresponding to the sample image, and the sample coordinate information corresponding to the sample image are used for describing a category and a position of a vehicle included in the sample image respectively. For example, the sample category information may include the category and a category confidence of the vehicle in the sample image, and the sample coordinate information may include coordinates of a top left corner of a detection box corresponding to the vehicle in the sample image, a height of the detection box, and a width of the detection box.

Next, the sample image of the sample is input into an initial model, such that a category information output network and a coordinate information output network of the initial model output predicted category information and predicted coordinate information respectively.

In the present implementation, the training executing body may input the sample image of the sample into the initial model, such that the category information output network and the coordinate information output network of the initial model may output the predicted category information and the predicted coordinate information respectively. Here, the initial model may be an untrained model or a model on which training is not completed. The initial model may include a feature extraction network, a category information output network, a coordinate information output network, a coordinate reliability output network, and a coordinate error information output network.

Then, sample coordinate reliability and sample coordinate error information are determined based on the predicted coordinate information and the sample coordinate information corresponding to the inputted sample image.

In the present implementation, the training executing body may determine the sample coordinate reliability and the sample coordinate error information based on the predicted coordinate information outputted from the initial model for the inputted sample image and the sample coordinate information corresponding to the inputted sample image. As an example, a determination rule for determining the sample coordinate reliability and the sample coordinate error information may be pre-stored within the training executing body, and the determination rule may be determined by skilled persons based on actual requirements. Thus, the training executing body may determine the sample coordinate reliability and the sample coordinate error information based on the determination rule. For example, for the sample coordinate reliability, assuming that the predicted coordinate information corresponding to a sample image is $(\mathbf{x}_1,\mathbf{y}_1)$, and the sample coordinate information is $(\mathbf{x}_2,\mathbf{y}_2)$, X-axis sample coordinate reliability corresponding to the sample image may be determined in accordance with the following computation rule:

$$C = \frac{1}{(1+\exp(-X))} \text{ ,}$$

where C denotes the sample coordinate reliability, and X denotes a difference value between $\mathbf{x}_1$ and $\mathbf{x}_2$. Similarly, Y-axis sample coordinate reliability corresponding to the sample image may also be computed in accordance with the above equation. For example, for solving the sample coordinate error information, the coordinate error information is, e.g., the offset variance. Assuming that the sample coordinate information is a mean value, a probability distribution of the predicted coordinate information is a predicted probability density function obeying Gaussian distribution. The executing body may pre-store a target probability distribution, and the target probability distribution may also obey the Gaussian distribution with a variance of 0. For example, the target probability distribution may be a Dirac $\delta$ function. The executing body may solve the offset variance by solving a minimum value of a relative entropy between the predicted probability density function and the target probability distribution (also known as Kullback-Leibler divergence), use the solved offset variance as the coordinate error information.

Finally the initial model is trained with the sample image as an input, and with the sample category information, the sample coordinate information, the sample coordinate reliability, and the sample coordinate error information, which correspond to the inputted sample image, as expected outputs, to obtain the vehicle detection model.

In present implementation, the training executing body may train the initial model with the sample image as the input, and with the sample category information, the sample coordinate information, the sample coordinate reliability, and the sample coordinate error information, which correspond to the inputted sample image, as the expected outputs, to obtain the vehicle detection model. For example, the training executing body may first use a preset loss function to compute differences between the predicted category information, the predicted coordinate information, predicted coordinate reliability, and predicted coordinate error information outputted from the initial model, and the sample category information, the sample coordinate information, the sample coordinate reliability, and the sample coordinate error information of the sample, and then adjust a model parameter of the initial model based on the computed differences, thereby obtaining the vehicle detection model. For example, the model parameter of the initial model may be adjusted using a back propagation (BP) algorithm or a stochastic gradient descent (SGD) algorithm. The present implementation can implement training of the vehicle detection model, such that the obtained vehicle detection model outputs more accurate results.

S103 includes: selecting, based on coordinate reliabilities of detection boxes, a detection box from the vehicle detection result for use as a to-be-processed detection box.

In the present embodiment, for a plurality of detection boxes in the vehicle detection result obtained in S102, the executing body may select, based on the coordinate reliabilities of the detection boxes, detection boxes from the plurality of detection boxes for use as to-be-processed detection boxes, for example, may select detection boxes with coordinate confidences greater than a preset threshold for use as the to-be-processed detection boxes. Here, the threshold may be set based on actual requirements. Here, the selected to-be-processed detection boxes may be in a same category.

S104 includes: generating, based on coordinate information and coordinate error information of the to-be-processed detection box, coordinate information of a processed detection box.

In the present embodiment, the executing body may generate, based on the coordinate information and the coordinate error information of the to-be-processed detection box, the coordinate information of the processed detection box. As an example, each to-be-processed detection box may include category information, coordinate information, coordinate reliability, and coordinate error information of the detection box. The executing body may pre-store a computation rule for computing new coordinate information based on the coordinate information and the coordinate error information of at least one to-be-processed detection box, such that the executing body may obtain the coordinate information of the processed detection box based on the computation rule. Here, the computation rule may be set by skilled persons based on actual requirements.

In some alternative implementations of the present embodiment, the method for detecting a vehicle may further include the following steps that are not shown in Fig. 1: generating a corrected detection result based on category information of the to-be-processed detection box and the coordinate information of the processed detection box.

In the present implementation, the executing body may generate the corrected detection result based on the category information of the to-be-processed detection box and the coordinate information of the processed detection box. Then, the executing body may further output the corrected detection result. For example, the executing body may take a category of the to-be-processed detection box as a category of the processed detection box, and here, the plurality of to-be-processed detection boxes may be in the same category. The executing body may use a largest category confidence among category confidences of the plurality of to-be-processed detection boxes as a category confidence of the processed detection box. Then, the executing body may use the category, the category confidence, and the coordinate information of the processed detection box as the corrected detection result. The present implementation can obtain the corrected detection result, which is more accurate compared with the vehicle detection result outputted from the vehicle detection model.

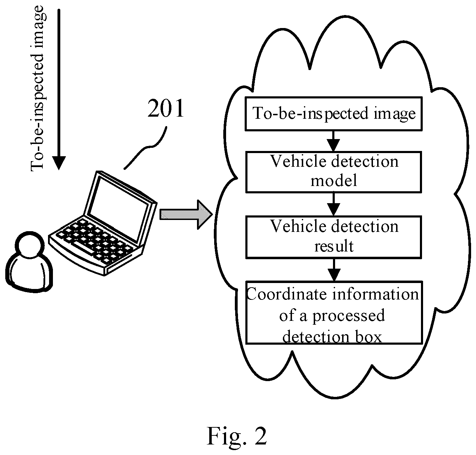

Further referring to Fig. 2, Fig. 2 is a schematic diagram of an application scenario of the method for detecting a vehicle according to the present embodiment. In the application scenario of Fig. 2, a terminal device 201 first acquires a to-be-inspected image. Then, the terminal device 201 inputs the to-be-inspected image into a pre-established vehicle detection model to obtain a vehicle detection result, where the vehicle detection result may include category information, coordinate information, coordinate reliabilities, and coordinate error information of detection boxes, then selects, based on the coordinate reliabilities of the detection boxes, a detection box from the vehicle detection result for use as a to-be-processed detection box; and finally generates, based on coordinate information and coordinate error information of the to-be-processed detection box, coordinate information of a processed detection box.

The method provided in the above embodiments of the present disclosure may further process, based on coordinate reliability and coordinate error information of a detection box, coordinate information of the detection box outputted from a vehicle detection model to generate coordinate information of a processed detection box, thereby improving the accuracy of the coordinate information of the detection box, and reducing the detection error caused by the inaccurate detection of the vehicle detection model.

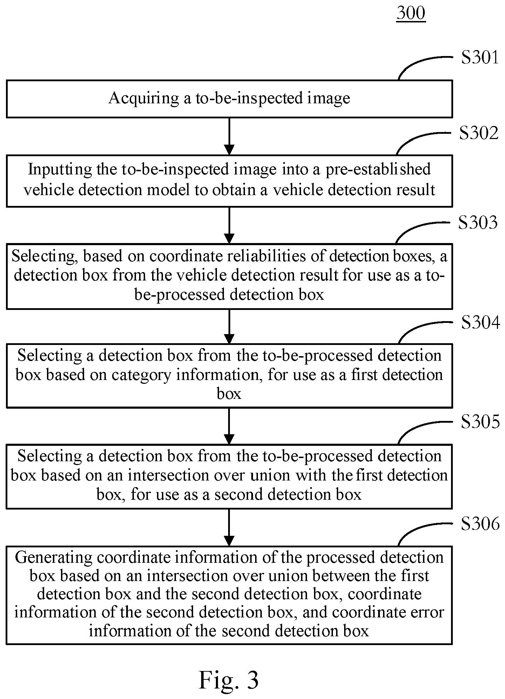

Further referring to Fig. 3, a process 300 of another embodiment of the method for detecting a vehicle is shown. The process 300 of the method for detecting a vehicle includes the following steps.

S301 includes: acquiring a to-be-inspected image.

In the present embodiment, S301 is similar to S101 in the embodiment shown in Fig. 1. The description will not be repeated here.

S302 includes: inputting the to-be-inspected image into a pre-established vehicle detection model to obtain a vehicle detection result.

In the present embodiment, S302 is similar to S102 in the embodiment shown in Fig. 1. The description will not be repeated here.

S303: selecting, based on coordinate reliabilities of detection boxes, detection boxes from the vehicle detection result for use as to-be-processed detection boxes.

In the present embodiment, S303 is similar to S103 in the embodiment shown in Fig. 1. The description will not be repeated here.

S304 includes: selecting a detection box from the to-be-processed detection boxes based on category information, for use as a first detection box.

In the present embodiment, an executing body may select a detection box from the to-be-processed detection boxes based on the category information, for use as the first detection box. For example, the executing body may select a detection box with a largest category confidence from the to-be-processed detection boxes for use as the first detection box.

S305 includes: selecting a detection box from the to-be-processed detection boxes based on an intersection over union with the first detection box, for use as a second detection box.

In the present embodiment, the executing body may first compute an intersection over union (IOU) between the first detection box and each of detection boxes other than the first detection box among the to-be-processed detection boxes. Here, the intersection over union may be computed based on an intersection over union function. Then, the executing body may select a to-be-processed detection box corresponding to an intersection over union greater than a preset threshold (for example, 0.5) for use as the second detection box.

S306 includes: generating coordinate information of the processed detection box based on an intersection over union between the first detection box and the second detection box, coordinate information of the second detection box, and coordinate error information of the second detection box.

In the present embodiment, the executing body may generate the coordinate information of the processed detection box based on the intersection over union between the first detection box and the second detection box, the coordinate information of the second detection box, and the coordinate error information of the second detection box. As an example, the executing body may pre-formulate a computing equation for generating the coordinate information of the processed detection box. Thus, the executing body may generate the coordinate information of the processed detection box in accordance with the equation. As an example, taking N second detection boxes as an example, assuming that an X-axis coordinate of an $i$-th ($1 \leq i \leq N$) detection box is $x_i$, coordinate error information of the $i$-th detection box is $\sigma_{x,i}^2$, and an intersection over union between the $i$-th detection box and the first detection box is $IOU(b_i, b)$, an X-axis coordinate of the coordinate information of the processed detection box may be computed in accordance with the following equation:

$$x = \frac{\sum_i p_i x_i / \sigma_{x,i}^2}{\sum_i p_i / \sigma_{x,i}^2}, \quad \text{where,} \quad p_i = e^{-(1 - IOU(b_i, b))^2 / \sigma_t};$$

and where, $\sigma_t$ is a manually set parameter. Similarly, a Y-axis coordinate of the coordinate information of the processed detection box may also be computed in accordance with the above equation.

As can be seen from Fig. 3, compared with the corresponding embodiment of Fig. 1, the process 300 of the method for detecting a vehicle in the present embodiment highlights the step of selecting a first detection box and a second detection box based on category information and an intersection over union, and generating coordinate information of a processed detection box based on the first detection box and the second detection box. Therefore, the solution described in the present embodiment can combine the first detection box with the second detection box based on the intersection over union, thereby generating more accurate coordinate information of the processed detection box.

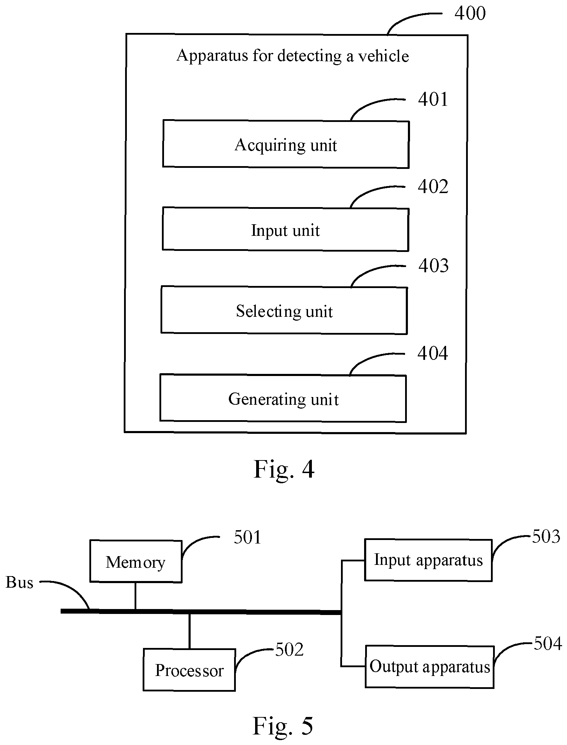

Further referring to Fig. 4, as an implementation of the method shown in the above figures, an embodiment of the present disclosure provides an apparatus for detecting a vehicle. The embodiment of the apparatus corresponds to the embodiment of the method shown in Fig. 1. The apparatus may be specifically applied to various electronic devices.

As shown in Fig. 4, the apparatus 400 for detecting a vehicle of the present embodiment includes: an acquiring unit 401, an input unit 402, a selecting unit 403, and a generating unit 404. The acquiring unit 401 is configured to acquire a to-be-inspected image; the inputting unit 402 is configured to input the to-be-inspected image into a pre-established vehicle detection model to obtain a vehicle detection result, where the vehicle detection result includes category information, coordinate information, coordinate reliabilities, and coordinate error information of detection boxes, and the vehicle detection model is configured for characterizing a corresponding relationship between images and vehicle detection results; the selecting unit 403 is configured to select, based on the coordinate reliabilities of the detection boxes, a detection box from the vehicle detection result for use as a to-be-processed detection box; and the generating unit 404 is configured to generate, based on coordinate information and coordinate error information of the to-be-processed detection box, coordinate information of a processed detection box.

The related description of S101, S102, S103, and S104 in the corresponding embodiment of Fig. 1 may be referred to for specific processing of the acquiring unit 401, the input unit 402, the selecting unit 403, and the generating unit 404 of the apparatus 400 for detecting a vehicle and the technical effects thereof in the present embodiment, respectively. The description will not be repeated here.

In some alternative implementations of the present embodiment, the generating unit 404 is further configured to: select a detection box from the to-be-processed detection box based on category information, for use as a first detection box; select a detection box from the to-be-processed detection box based on an intersection over union with the first detection box, for use as a second detection box; and generate coordinate information of the processed detection box based on an intersection over union between the first detection box and the second detection box, coordinate information of the second detection box, and coordinate error information of the second detection box.

In some alternative implementations of the present embodiment, the vehicle detection model includes a feature extraction network, and the feature extraction network includes a dilated convolution layer and/or an asymmetrical convolution layer.

In some alternative implementations of the present embodiment, the vehicle detection model includes a category information output network, a coordinate information output network, a coordinate reliability output network, and a coordinate error information output network; and the vehicle detection model is trained by: acquiring a sample set, where a sample includes a sample image, sample category information corresponding to the sample image, and sample coordinate information corresponding to the sample image; inputting the sample image of the sample into an initial model, such that a category information output network and a coordinate information output network of the initial model output predicted category information and predicted coordinate information respectively; determining sample coordinate reliability and sample coordinate error information based on the predicted coordinate information and the sample coordinate information corresponding to the inputted sample image; and training the initial model with the sample image as an input, and with the sample category information, the sample coordinate information, the sample coordinate reliability, and the sample coordinate error information, which correspond to the inputted sample image, as expected outputs, to obtain the vehicle detection model.

In some alternative implementations of the present embodiment, the apparatus 400 further includes: a result generating unit (not shown in the figure) configured to generate a corrected detection result based on category information of the to-be-processed detection box and the coordinate information of the processed detection box.

According to an embodiment of the present disclosure, the present disclosure further provides an electronic device and a readable storage medium.

As shown in Fig. 5, a block diagram of an electronic device of the method for detecting a vehicle according to embodiments of the present disclosure is shown. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 5, the electronic device includes: one or more processors 501, a memory 502, and interfaces for connecting various components, including a high-speed interface and a low-speed interface. The various components are interconnected using different buses, and may be mounted on a common motherboard or in other manners as required. The processor may process instructions for execution within the electronic device, including instructions stored in the memory or on the memory to display graphical information for a GUI on an external input/output apparatus (e.g., a display device coupled to an interface). In other implementations, a plurality of processors and/or a plurality of buses may be used, as appropriate, along with a plurality of memories and a plurality of memories. Similarly, a plurality of electronic devices may be connected, with each device providing portions of necessary operations (e.g., as a server array, a group of blade servers, or a multi-processor system). In Fig. 5, a processor 501 is taken as an example.

The memory 502 is a non-transitory computer readable storage medium provided in the present disclosure. The memory stores instructions executable by at least one processor, such that the at least one processor executes the method for detecting a vehicle provided in the present disclosure. The non-transitory computer readable storage medium of the present disclosure stores computer instructions. The computer instructions are used for causing a computer to execute the method for detecting a vehicle provided in the present disclosure.

As a non-transitory computer readable storage medium, the memory 502 may be configured to store non-transitory software programs, non-transitory computer executable programs and modules, such as the program instructions/modules (e.g., the acquiring unit 401, the input unit 402, the selecting unit 403, and the generating unit 404 shown in Fig. 4) corresponding to the method for detecting a vehicle in some embodiments of the present disclosure. The processor 501 runs non-transitory software programs, instructions, and modules stored in the memory 502, so as to execute various function applications and data processing of a server, i.e., implementing the method for detecting a vehicle in the above embodiments of the method.

The memory 502 may include a program storage area and a data storage area, where the program storage area may store an operating system and an application program required by at least one function; and the data storage area may store, e.g., data created based on use of the electronic device for detecting a vehicle. In addition, the memory 502 may include a high-speed random-access memory, and may further include a non-transitory memory, such as at least one disk storage component, a flash memory component, or other non-transitory solid state storage components. In some embodiments, the memory 502 alternatively includes memories disposed remotely relative to the processor 501, and these remote memories may be connected to the electronic device for detecting a vehicle via a network. Examples of the above network include, but are not limited to, the Internet, an intranet, a local area network, a mobile communication network, and a combination thereof.

The electronic device of the method for detecting a vehicle may further include: an input apparatus 503 and an output apparatus 504. The processor 501, the memory 502, the input apparatus 503, and the output apparatus 504 may be connected through a bus or in other manners. Bus connection is taken as an example in Fig. 5.

The input apparatus 503 may receive inputted number or character information, and generate a keying signal input related to user settings and function control of the electronic device for detecting a vehicle, e.g., an input apparatus such as a touch screen, a keypad, a mouse, a trackpad, a touchpad, an indicating arm, one or more mouse buttons, a trackball, and a joystick. The output apparatus 504 may include a display device, an auxiliary lighting apparatus (e.g., an LED), a haptic feedback apparatus (e.g., a vibration motor), and the like. The display device may include, but is not limited to, a liquid crystal display (LCD), a light emitting diode (LED) display, and a plasma display. In some implementations, the display device may be a touch screen.

Various implementations of the systems and technologies described herein may be implemented in a digital electronic circuit system, an integrated circuit system, an ASIC (application specific integrated circuit), computer hardware, firmware, software, and/or a combination thereof. The various implementations may include: an implementation in one or more computer programs that are executable and/or interpretable on a programmable system including at least one programmable processor, which may be a special-purpose or general-purpose programmable processor, and may receive data and instructions from, and transmit data and instructions to, a storage system, at least one input apparatus, and at least one output apparatus.

These computing programs (also known as programs, software, software applications, or code) include machine instructions for a programmable processor, and may be implemented in a high-level procedural and/or object-oriented programming language, and/or in an assembly/machine language. As used herein, the terms "machine-readable medium" and "computer readable medium" refer to any computer program product, device, and/or apparatus (e.g., a magnetic disk, an optical disk, a memory, or a programmable logic device (PLD)) configured to provide machine instructions and/or data to a programmable processor, and include a machine-readable medium receiving machine instructions as machine-readable signals. The term "machine-readable signal" refers to any signal used to provide machine instructions and/or data to a programmable processor.

To provide interaction with a user, the systems and technologies described herein may be implemented on a computer that is provided with: a display apparatus (e.g., a CRT (cathode ray tube) or a LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or haptic feedback); and an input may be received from the user in any form (including an acoustic input, a voice input, or a tactile input).

The systems and technologies described herein may be implemented in a computing system (e.g., as a data server) that includes a back-end component, or a computing system (e.g., an application server) that includes a middleware component, or a computing system (e.g., a user computer with a graphical user interface or a web browser through which the user can interact with an implementation of the systems and technologies described herein) that includes a front-end component, or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and usually interact via a communication network. The relationship between the client and the server arises by virtue of computer programs that run on corresponding computers and have a client-server relationship with each other.

The technical solutions according to the embodiments of the present disclosure may further process, based on coordinate reliability and coordinate error information of a detection box, coordinate information of the detection box outputted from a vehicle detection model to generate coordinate information of a processed detection box, thereby improving the accuracy of the coordinate information of the detection box, and reducing the detection error caused by the inaccurate detection of the vehicle detection model.

It should be understood that the various forms of processes shown above may be used to reorder, add, or delete steps. For example, the steps disclosed in the present disclosure may be executed in parallel, sequentially, or in different orders, as long as the desired results of the technical solutions disclosed in the present disclosure can be implemented. This is not limited herein.

The above specific implementations do not constitute a limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be included within the scope of protection of the present disclosure.

**Claims**

1. A method for detecting a vehicle, comprising:

   acquiring a to-be-inspected image;
   inputting the to-be-inspected image into a pre-established vehicle detection model to obtain a vehicle detection result, wherein the vehicle detection result includes category information, coordinate information, coordinate reliabilities, and coordinate error information of detection boxes, and the vehicle detection model is configured for characterizing a corresponding relationship between images and vehicle detection results;
   selecting, based on the coordinate reliabilities of the detection boxes, a detection box from the vehicle detection result for use as a to-be-processed detection box; and
   generating, based on coordinate information and coordinate error information of the to-be-processed detection box, coordinate information of a processed detection box.

2. The method according to claim 1, wherein the generating, based on the coordinate information and the coordinate error information of the to-be-processed detection box, the coordinate information of the processed detection box comprises:

   selecting a detection box from the to-be-processed detection box based on the category information, for use as a first detection box;
   selecting a detection box from the to-be-processed detection box based on an intersection over union with the first detection box, for use as a second detection box; and
   generating coordinate information of the processed detection box based on an intersection over union between the first detection box and the second detection box, coordinate information of the second detection box, and coordinate error information of the second detection box.

3. The method according to any one of claims 1 to 2, wherein the vehicle detection model comprises a feature extraction network, and the feature extraction network comprises a dilated convolution layer and/or an asymmetrical convolution layer.

4. The method according to any one of claims 1 to 3, wherein the vehicle detection model comprises a category information output network, a coordinate information output network, a coordinate reliability output network, and a coordinate error information output network; and
   the vehicle detection model is trained by:

   acquiring a sample set, wherein a sample comprises a sample image, sample category information corresponding to the sample image, and sample coordinate information corresponding to the sample image;
   inputting the sample image of the sample into an initial model, such that a category information output network and a coordinate information output network of the initial model output predicted category information and predicted coordinate information respectively;
   determining sample coordinate reliability and sample coordinate error information based on the predicted coordinate information and the sample coordinate information corresponding to the inputted sample image; and
   training the initial model with the sample image as an input, and with the sample category information corresponding to the inputted sample image, the sample coordinate information corresponding to the inputted sample image, the sample coordinate reliability corresponding to the inputted sample image, and the sample coordinate error information corresponding to the inputted sample image as expected outputs, to obtain the vehicle detection model.

5. The method according to any one of claims 1 to 4, wherein the method further comprises:
   generating a corrected detection result based on category information of the to-be-processed detection box and coordinate information of the processed detection box.

6. An apparatus for detecting a vehicle, comprising:

an acquiring unit configured to acquire a to-be-inspected image;

an inputting unit configured to input the to-be-inspected image into a pre-established vehicle detection model to obtain a vehicle detection result, wherein the vehicle detection result includes category information, coordinate information, coordinate reliabilities, and coordinate error information of detection boxes, and the vehicle detection model is configured for characterizing a corresponding relationship between images and vehicle detection results;

a selecting unit configured to select, based on the coordinate reliabilities of the detection boxes, a detection box from the vehicle detection result for use as a to-be-processed detection box; and

a generating unit configured to generate, based on coordinate information and coordinate error information of the to-be-processed detection box, coordinate information of a processed detection box.

7. The apparatus according to claim 6, wherein the generating unit is further configured to:

select a detection box from the to-be-processed detection box based on the category information, for use as a first detection box;

select a detection box from the to-be-processed detection box based on an intersection over union with the first detection box, for use as a second detection box; and

generate coordinate information of the processed detection box based on an intersection over union between the first detection box and the second detection box, coordinate information of the second detection box, and coordinate error information of the second detection box.

8. The apparatus according to any one of claims 6 to 7, wherein the vehicle detection model comprises a feature extraction network, and the feature extraction network comprises a dilated convolution layer and/or an asymmetrical convolution layer.

9. The apparatus according to any one of claims 6 to 8, wherein the vehicle detection model comprises a category information output network, a coordinate information output network, a coordinate reliability output network, and a coordinate error information output network; and

the vehicle detection model is trained by:

acquiring a sample set, wherein a sample comprises a sample image, sample category information corresponding to the sample image, and sample coordinate information corresponding to the sample image;

inputting the sample image of the sample into an initial model, such that a category information output network and a coordinate information output network of the initial model output predicted category information and predicted coordinate information respectively;

determining sample coordinate reliability and sample coordinate error information based on the predicted coordinate information and the sample coordinate information corresponding to the inputted sample image; and

training the initial model with the sample image as an input, and with the sample category information corresponding to the inputted sample image, the sample coordinate information corresponding to the inputted sample image, the sample coordinate reliability corresponding to the inputted sample image, and the sample coordinate error information corresponding to the inputted sample image as expected outputs, to obtain the vehicle detection model.

10. The apparatus according to any one of claims 6 to 9, wherein the apparatus further comprises:

a result generating unit configured to generate a corrected detection result based on category information of the to-be-processed detection box and coordinate information of the processed detection box.

11. An electronic device, comprising:

at least one processor; and

a memory communicatively connected to the at least one processor; wherein

the memory stores instructions executable by the at least one processor, and the instructions are executed by the at least one processor, to cause the at least one processor to execute the method according to any one of claims 1 to 5.

12. A non-transitory computer readable storage medium storing computer instructions, wherein the computer instructions are used for causing the computer to execute the method according to any one of claims 1 to 5.

100

S101

| Acquiring a to-be-inspected image |
|---|

S102

| Inputting the to-be-inspected image into a pre-established vehicle detection model to obtain a vehicle detection result |
|---|

S103

| Selecting, based on coordinate reliabilities of detection boxes, a detection box from the vehicle detection result for use as a to-be-processed detection box |
|---|

S104

| Generating, based on coordinate information and coordinate error information of the to-be-processed detection box, coordinate information of a processed detection box |
|---|

Fig. 1

To-be-inspected image

201

To-be-inspected image

Vehicle detection model

Vehicle detection result

Coordinate information of a processed detection box

Fig. 2

300

S301

Acquiring a to-be-inspected image

S302

Inputting the to-be-inspected image into a pre-established vehicle detection model to obtain a vehicle detection result

S303

Selecting, based on coordinate reliabilities of detection boxes, a detection box from the vehicle detection result for use as a to-be-processed detection box

S304

Selecting a detection box from the to-be-processed detection box based on category information, for use as a first detection box

S305

Selecting a detection box from the to-be-processed detection box based on an intersection over union with the first detection box, for use as a second detection box

S306

Generating coordinate information of the processed detection box based on an intersection over union between the first detection box and the second detection box, coordinate information of the second detection box, and coordinate error information of the second detection box

Fig. 3

400

Apparatus for detecting a vehicle

401

Acquiring unit

402

Input unit

403

Selecting unit

404

Generating unit

Fig. 4

501

Memory

Bus

503

Input apparatus

502

Processor

504

Output apparatus

Fig. 5

## INTERNATIONAL SEARCH REPORT

| International application No. |
|---|
| **PCT/CN2020/130110** |

**A.    CLASSIFICATION OF SUBJECT MATTER**

G06K 9/00(2006.01)i

According to International Patent Classification (IPC) or to both national classification and IPC

**B.    FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNKI, CNPAI, WPI, EPODOC, IEEE: 车辆, 检测, 图像, 模型, 检测框, 坐标, 误差, 可信度, 置信度, vehicle, detecting, detection, image, model, detection frame, coordinates, error, confidence

**C.    DOCUMENTS CONSIDERED TO BE RELEVANT**

| Category* | Citation of document, with indication, where appropriate, of the relevant passages | Relevant to claim No. |
|---|---|---|
| PX | CN 111553282 A (BEIJING BAIDU NETCOM SCIENCE AND TECHNOLOGY CO., LTD.) 18 August 2020 (2020-08-18)<br>    claims 1-12 | 1-12 |
| A | CN 109711274 A (ZEBRED NETWORK TECHNOLOGY CO., LTD.) 03 May 2019 (2019-05-03)<br>    description paragraphs [0081]-[0108], [0167]-[0172], figures 1-2 | 1-12 |
| A | CN 106446834 A (NEUSOFT CORPORATION) 22 February 2017 (2017-02-22)<br>    entire document | 1-12 |
| A | CN 108875902 A (BEIJING KUANGSHI TECHNOLOGY CO., LTD. et al.) 23 November 2018 (2018-11-23)<br>    entire document | 1-12 |
| A | US 2020065981 A1 (INCORPORATED NATIONAL UNIVERSITY IWATE UNIVERSITY et al.) 27 February 2020 (2020-02-27)<br>    entire document | 1-12 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 January 2021** | **20 February 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/130110**

| Patent document cited in search report | | | Publication date (day/month/year) | Patent family member(s) | | | Publication date (day/month/year) |
|---|---|---|---|---|---|---|---|
| CN | 111553282 | A | 18 August 2020 | None | | | |
| CN | 109711274 | A | 03 May 2019 | None | | | |
| CN | 106446834 | A | 22 February 2017 | None | | | |
| CN | 108875902 | A | 23 November 2018 | None | | | |
| US | 2020065981 | A1 | 27 February 2020 | FR | 3085219 | A1 | 28 February 2020 |
| | | | | JP | 2020030768 | A | 27 February 2020 |
| | | | | DE | 102019122690 | A1 | 27 February 2020 |
| | | | | IN | 201914033828 | A | 28 February 2020 |

Form PCT/ISA/210 (patent family annex) (January 2015)

**EP 4 047 511 A1**

REFERENCES CITED IN THE DESCRIPTION

**Patent documents cited in the description**

- CN 202010356239